Europäisches Patentamt

(19) European Patent Office

Office européen des brevets

(11) Publication number: **0 302 908 B1**

# (12) EUROPEAN PATENT SPECIFICATION

(45) Date of publication of patent specification:
**09.10.91 Bulletin 91/41**

(21) Application number: **88901134.2**

(22) Date of filing: **19.01.88**

(86) International application number:
**PCT/US88/00106**

(87) International publication number:
**WO 88/05563 28.07.88 Gazette 88/17**

(51) Int. Cl.⁵: **G03G 15/01, G03G 15/16**

## (54) COLOR ELECTROSTATOGRAPHIC APPARATUS HAVING AN INTERMEDIATE TRANSFER MEMBER.

(30) Priority: **27.01.87 US 7036**
**10.11.87 US 119370**

(43) Date of publication of application:
**15.02.89 Bulletin 89/07**

(45) Publication of the grant of the patent:
**09.10.91 Bulletin 91/41**

(84) Designated Contracting States:
**DE FR GB NL**

(56) References cited:
**EP-A- 0 146 945**
**US-A- 3 904 406**
**US-A- 4 095 879**
**Patent Abstracts of Japan, vol. 9, no. 253
(P-395)(1976), 11 October 1985, & JP A
60103377
Patent Abstracts of Japan, vol. 10, no. 256
(P-493)(2312), 2 September 1986, & JP A
6183557**

(73) Proprietor: **EASTMAN KODAK COMPANY (a
New Jersey corporation)
343 State Street
Rochester New York 14650 (US)**

(72) Inventor: **BOTHNER, Rose, Marie
135 Rowland Parkway
Rochester, NY 14610 (US)**
Inventor: **BUTLER, James, Loul
275 Westfield Street
Rochester, NY 14619 (US)**
Inventor: **MAHONEY, Gregory, Peter
27 Whitebrook Rise
Fairport, NY 14450 (US)**
Inventor: **BENWOOD, Bruce, Robert
10 Maplegrove Drive
Churchville, NY 14428 (US)**

(74) Representative: **Blickle, K. Werner, Dipl.-Ing.
et al
KODAK AKTIENGESELLSCHAFT Postfach
600345
W-7000 Stuttgart-Wangen 60 (DE)**

EP 0 302 908 B1

Jouve, 18, rue Saint-Denis, 75001 PARIS

## Description

### Technical Field

This invention relates to electrostatography, and more specifically to color copiers and printers having an intermediate transfer member for receiving two or more electrostatically held toner images in registry from which they can be transferred to a copy sheet or other receiving surface.

### Background Art

U.S. Patents No. 3,612,677 and No. 4,058,850 show an electrophotographic copier having a transfer drum to which a copy sheet is secured. The drum brings the copy sheet into transfer relation with two or more toner images carried in tandem on an image member to transfer those images to the copy sheet in registration. This is a common transfer apparatus for modern color copiers and has been suggested for color printers.

However, certain advantages can be obtained if the separate color images are transferred in registry directly to an intermediate transfer member, such as a drum or an endless web, and then transferred as a single multicolor image to the final copy sheet or other receiving surface. With this known system, registration of the color images is not affected by the ability of the apparatus to hold the copy sheet or varying thicknesses of the sheets.

Using such an apparatus, the circumference of the drum or endless belt must be larger than the smallest dimension of the largest size image to be transferred to it. When a smaller image is transferred to the same intermediate member, a portion of the circumference is unused. This unused circumference requires a comparable space between toner images on the image bearing member. Provision of such a space on the image bearing member reduces the output of that member at any given lineal speed, and thereby the speed of the copier or printer.

Although sizes vary around the world, a common largest size is 11 by 17 inches (approximately 28 x 43 cm.), commonly called "ledger" size. In the United States the most common size is 8 1/2 by 11 inches (approximately 22 x 28 cm.) or "letter" size.

Electrophotographic color copiers commonly can accommodate ledger size images. If a letter size image is transferred to the same intermediate member in the same orientation, six inches (15 cm) of circumference must be unused. The images must be separated by that amount on the image member. Thus, the copier or printer does not operate at its optimum speed when using the smaller size. Unfortunately, letter size is likely to be the most common size used.

### Disclosure of the Invention

It is the object of the invention to provide a method and apparatus of the type in which an endless intermediate transfer member rotates into transfer relation with more than one image to transfer those images in registration, but which method and apparatus operate efficiently for both large and small size images.

This and other objects are accomplished by a method of forming multicolor images of the type in which a series of toner images of different color are formed on an image member and then presented in order to an endless intermediate transfer member, transferred directly to the surface of the intermediate member in registration as the intermediate member rotates repeatedly into transfer relationship with the image member and then transferred in one step from the transfer member to a copy sheet or other receiving surface, characterized in that said image forming step includes both forming large toner images on the image member which large toner images have a long dimension running parallel with the direction of motion of the image member and forming small toner images which small toner images have their long dimension running across said direction of motion and in that said endless transfer member has a circumference substantially equal to the distance on said image member between comparable points in consecutive large images and equal to the distance on said image member between comparable points in consecutive pairs of small images.

The object is also accomplished by an apparatus for carrying out said method.

The invention, and its objects and advantages, will become more apparent in the detailed description of the preferred embodiments presented below.

### Brief Description of the Drawings

Fig. 1 is a schematic diagram of a multicolor electrostatographic printer incorporating the invention;

Fig. 2 is a schematic plan view of an image member with both ledger sized images and letter sized images thereon;

Fig. 3 is a schematic drawing of an alternative embodiment of the invention.

### Best Mode of Carrying Out the Invention

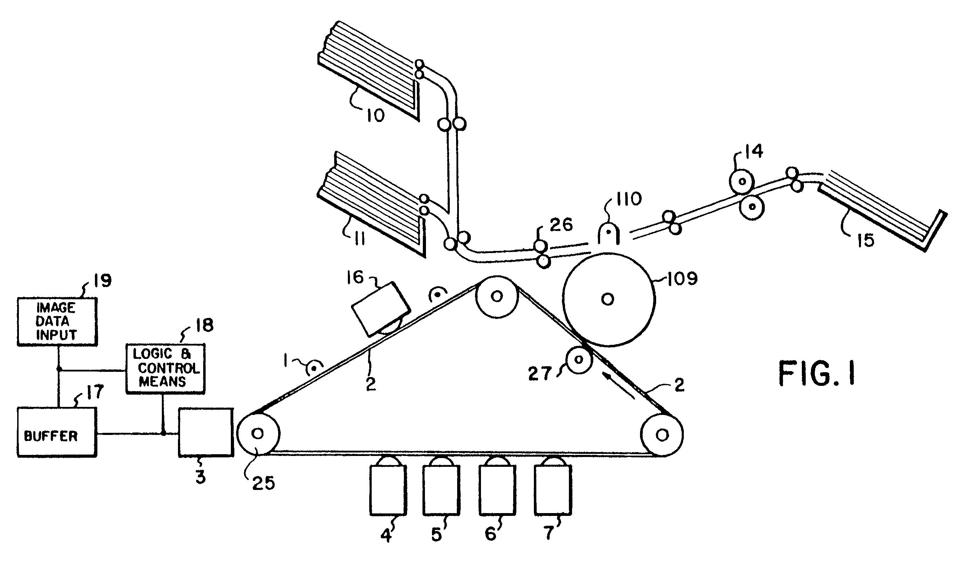

According to Fig. 1, electrostatographic apparatus, for example, a non-impact, electrophotographic printer, includes a charging mechanism 1 which places a uniform charge on an image member 2, for example, an endless photoconductive web mounted on rollers. An electronic exposure station 3 imagewise exposes the charged image member 2 creating an electrostatic image which is toned by one of toner stations 4, 5, 6 and 7. The toned image is then transferred to a transfer or copy sheet by a transfer apparatus. Transfer apparatus includes an endless intermediate transfer member, for example, drum 109, and a backup roller 27 offset slightly upstream of drum 109 to create a low pressure nip. Copy sheets are fed from copy sheet supply stations 10 or 11 through a series of rollers and guides to the transfer apparatus. As controlled by intermittently driven rollers 26, the copy sheets are driven into engagement with drum 109 at a location remote from backup roller 27. Multicolor toner images are transferred to them as more fully described below. To assist in transfer, drum 109 is electrically biased by means (not shown) well known in the art. Copy sheets leave the transfer apparatus and are transported by rollers and guides to a fuser 14 and then to a receiving hopper 15. The image member 2 is cleaned for reuse at a cleaning station 16.

Although exposure station 3 is shown as an electronic exposure station it can also be an optical exposing station with minor variations in the schematics of Fig. 1. Typical electronic exposure stations can include, for example, laser scanning apparatus or an LED printhead, both structures well known in the art.

Developing stations 4, 5, 6 and 7 can be any of a variety well known in the art. For example, they can each be a separate magnetic brush developing station containing a different color toner. For example station 4 can apply cyan toner, station 5 magenta toner, station 6 yellow toner and station 7 black toner, all as is well known in the art. They are mounted for selective toning of images so that each image receives only one of the four colors applied to it.

Copy sheet supply stations 10 and 11 are capable of storing different size copy sheets. For example, copy sheet supply station 10 includes letter size sheets oriented with their long dimension across the feed direction and short dimension parallel to it. Copy sheet supply station 11 includes ledger size sheets with their short dimension across the feed direction and their long dimension parallel to it.

Exposure station 3 responds to data fed from an image memory, for example, buffer 17 which stores information representing images to be produced. The information stored in buffer 17 is received from an image data input 19 which can be a computer, a scanner or the like. A logic and control means 18 controls the storage of the image data in the buffer and the submission of the image data, including the order of submission of the images, from the buffer to the exposure mechanism 3, all as is well known in the art.

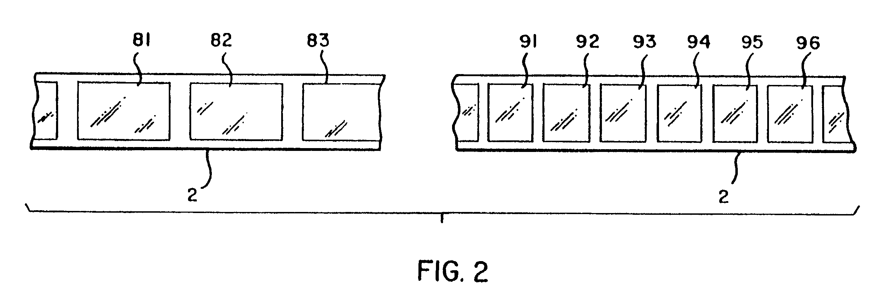

In operation, when a ledger size copy sheet is to be used, logic and control means 18 programs the image forming means 3 to expose image member 2 to create consecutive images suitable for transfer to a single ledger size copy sheet. For example, referring to Fig. 2 (to a smaller scale than the other Figs.), if a three color image is to be produced, three images 81, 82, and 83, representing three different color components of a multicolor image, are produced on image member 2 with the long direction of each image parallel to the direction of movement of the image member 2. One is toned with cyan, the second is toned with magenta, and the third is toned with yellow toner by the developing stations 4, 5, and 6 respectively. The drum 109 has a circumference equal to the distance on the image member 2 between comparable points in consecutive ledger image areas. Thus, with the aid of the electric field mentioned above the consecutive images are transferred in registry to the surface of transfer drum 109. A ledger sized copy sheet is fed from copy sheet supply 11 and, as timed by rollers 26, is superposed on the multicolor image. The multicolor image is transferred to the copy sheet by a suitable transfer device, for example, a backup roller transfer device or an ordinary corona transfer device 110. The copy sheet is then fed onto fuser 14 and copy sheet hopper 15, all as is well known in the art. Also as is well known in the art, the copy sheet can be recirculated to receive one or more images on its reverse side by a suitable mechanism, not shown.

When images are to be produced on letter size copy sheets, image forming means 3 exposes image member 2 with information to create six images, 91-96, arranged on member 2 with their short dimension parallel to the direction of movement and long dimension across the direction of movement. Images 91, 93 and 95 are the cyan, magenta and yellow components of one multicolor image and images 92, 94 and 96 are the comparable components for a second multicolor image. Copy sheets are fed out of copy sheet supply 10 with their short dimension parallel to the path of travel. The drum 109 again rotates through three revolutions.

If both sheets are receiving the same images then the logic and control 18 causes the exposure station 3 to produce two identical cyan images, two identical magenta images, and then two identical yellow images on the image member 2. If the two sheets are to receive different images, then exposure station 3 as controlled by logic and control 18 exposes photoconductor 2 with the image data associated first with first sheet cyan, then second sheet cyan, then first sheet magenta, and second sheet magenta, and then first sheet yellow, and then second sheet yellow. Although this particular mode could be accomplished in an optical copier either by using a platen with both pages one and two on the platen at the same time or by continuously refeeding pages one and two or color separations of pages one and two, it is considerably easier to accomplish in an electronic exposing device as shown in Fig. 1 using image memory or buffer 17 as controlled by logic and control means 18 to present the images in their proper order to exposure station 3.

In order for the transfer drum to receive the images in registry, it should have a circumference substantially equal to the distance on the image member between comparable points in consecutive large images and comparable points in consecutive pairs of small images.

The transfer drum 109 sees the image member as a succession of images as shown in Fig. 2. However, it should be understood that Fig. 2 is schematic and shows more image areas than would normally be present at one time on an image member. Image member 2 could of course be a quite small drum having room for one or less than one image per revolution.

Because this method requires two transfers of the toner it requires cleaning of the drum between copies (which can be accomplished by web or brush cleaning mechanisms well known in the art, see, for example, U.S. Patent 4,058,850.)

Legal size copy sheets (approximately 22 x 36 cm.) can be handled either of two ways. Referring to Fig. 2, a legal size copy sheet can be placed with its long dimension parallel with the direction of motion in the first mode of operation of the transfer apparatus. With this approach, the apparatus will give legal size copy sheet output at the speed of ledger sized output. Alternatively, the image member 2 can be made wider and drum 109 can be made longer (across the direction of motion) to accommodate legal size copy sheets in the same manner and at the same speed as letter size copy sheets, and the apparatus would operate in the second mode. Similarly, it is within the skill of the art to accommodate this invention to other sizes by adjusting orientation of the images and the size of the spaces between them on the image member.

Copy sheet registration is controlled by a pair of rollers 26 which in a start and stop action drive a copy sheet into engagement with the drum 109. The drum itself is geared to the primary web control roller 25 which is connected to an encoder (not shown). As is well known in the art, the encoder creates a signal which is used to control the location of the electrostatic image by controlling exposure station 3, for example, by triggering actuation of an LED print head. The same encoder signal is also used to start rollers 26 to feed copy sheets into engagement with drum 109 in timed relation to the arrival of the multicolor image. Obviously, other timing mechanisms could be used, see for example, U.S. 4,082,443.

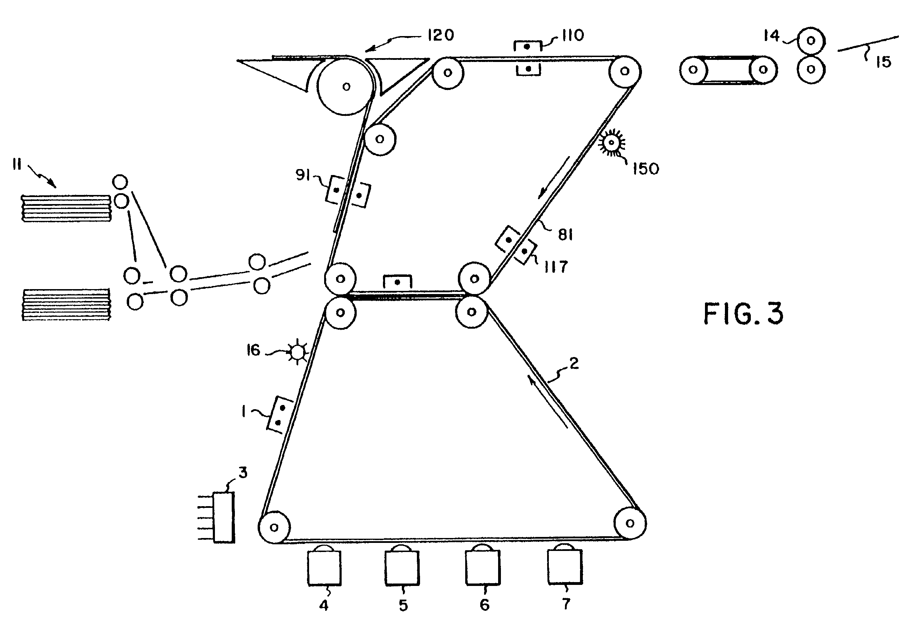

According to Fig. 3, the invention can also be carried out with an endless web or belt as the intermediate transfer member. An image member, for example, electrophotosensitive belt 2 which may be of a typical electrophotographic type is used to create toner images of different color by essentially the same method as illustrated in Figs. 1-2. As shown, the belt 2 is uniformly charged at a charging station 1 and exposed at an exposing station 3 providing a series of electrostatic images. The electrostatic images are each toned by one of four toning stations 4, 5, 6 and 7, each of which contains toner of a desired color.

These images make up the color component of two multicolor images to be produced. The electrophotosensitive belt then passes into transfer relation with an endless intermediate transfer member, for example, belt 81, moving at the same speed as the image member 2 at the point or points of contact of the two members.

The images formed on the image member 2 are transferred in registration to the intermediate member creating first and second multicolor images.

Intermediate member 81 is an endless belt mounted on a series of rollers and driven through a path bringing it into operative relationship with a first transfer station 91 and a second transfer station 110. Copy sheets stored in a copy sheet supply 11 are fed in a known manner to first transfer station 91 for receipt of a first multicolor image on a first side thereof. Copy sheets are fed from first transfer station 91 to a turnaround drum 120 which inverts the copy sheets without touching the, as yet unfused, multicolor toner image on the first side and feeds the copy sheet into transfer relation with the intermediate member 81 at the second transfer station 110. A second multicolor toner image is transferred to the second side of the copy sheet at the second transfer station 110. The copy sheet is then fed to a duplex fuser 14 and then into an output hopper 15.

Control and feeding of the copy sheet from the first transfer station 91 through the fuser 14 must be done with care not to disturb unfused toner images. Such apparatus is shown and described more completely in U.S. Patent No. 4,095,979, issued June 20, 1978 to DiFrancesco et al, which patent is incorporated by reference herein.

The electrophotosensitive belt is cleaned at cleaning station 16 between images. The intermediate member 81 may also be cleaned by appropriate means 150. The transfer stations 91 and 110 include corona chargers of opposite polarity on opposite sides of member 81, urging the toner from the intermediate member 81 to the copy sheet. An initialization station 117 includes opposing AC chargers for eliminating charge on the intermediate member 81 before repeating the process.

The exposure station 3 is shown as an electronic print head. It, of course, may be an ordinary optical exposing station. However, single-pass duplexing is particularly useful with electronic origin images because the order of images received in a printer fits the order of images handled by the transfer apparatus in that system.

The electrostatic images need not be created electrophotographically. For example, they may be formed electrographically by an ion projection mechanism on an ordinary, not photosensitive, insulating surface.

Intermediate member 81 can be equal in length to the length of a ledger sized sheet, or multiples thereof.

If a belt accommodating this size is used and images having a width equal to letter sized sheets are formed in some applications, then there is room on the intermediate member to receive two letter sized images placed with their small dimension running longitudinally of the two webs. With this arrangement, two multicolor images would be carried on intermediate web 81 at one time. Thus, in a four color system, using letter sized copy sheets, the order of images on the electrophotosensitive member 2 can be Cyan No. 1, Cyan No. 2, Magenta No. 1, Magenta No. 2, Yellow No. 1, Yellow No. 2, Black No. 1 and Black No. 2. Two-multicolor images would then appear on consecutive half portions of the intermediate member as it reaches the first and second transfer stations 91 and 110, respectively. In the ledger mode, only one multicolor image is formed at a time on the web 81. The first multicolor image is transferred to the copy sheet, and the copy sheet waits at turnaround drum 120 while the intermediate web makes four revolutions to form the second multicolor image. At that time, the transfer sheet is fed to the second transfer station to receive it.

If simplex copies are to be made with this apparatus, the second sheet can be fed directly to the second transfer station 110 by means not shown.

The invention has been described in detail with particular reference to a preferred embodiment thereof, but it will be understood that variations and modifications can be effected within the scope of the invention as defined in the appended claims.

## Claims

1. A method of forming multicolor images of the type in which a series of toner images of different color are formed on an image member and then presented in order to an endless intermediate transfer member, transferred directly to the surface of the intermediate member in registration as the intermediate member rotates repeatedly into transfer relationship with the image member and then transferred in one step from the transfer member to a copy sheet or other receiving surface, characterized in that said image forming step includes both forming large toner images on the image member which large toner images have a long dimension running parallel with the direction of motion of the image member and forming small toner images which small toner images have their long dimension running across said direction of motion and in that said transfer member has a circumference substantially equal to the distance on said image member between comparable points in consecutive large images and equal to the distance on said image member between comparable points in consecutive pairs of small images.

2. The method according to Claim 1 including applying toner of different color to at least two consecutive large electrostatic images and to at least two consecutive pairs of small electrostatic images.

3. An electrostatographic apparatus for carrying out the method of claim 1 including means (3) for forming a series of electrostatic images on a moving image member (2), means (4,5,6,7) for toning each electrostatic image with a toner of a different color, means for transferring the toner images to an endless intermediate transfer member (109;81) in registration, and means (91,110) for transferring the resultant multicolor toner image to a receiving sheet or other surface, characterized in that the image forming means(3) includes means for forming large electrostatic images on the image member which large electrostatic images have a long dimension running parallel with the direction of motion of the image member(2), and for forming small electrostatic images which small electrostatic images have their long dimension running across said direction of motion and the transfer member has a circumference substantially equal to the distance on said image member(2) between comparable points on consecutive large images and comparable points on consecutive pairs of small images.

4. Apparatus according to Claim 3 wherein said forming means(3) includes means for forming an electrostatic image in response to electrical signals, and control means(18) cooperative with an image memory(17) for presenting electrical signals stored in said image memory to said forming means in a first predetermined order when large images are to be formed and in a second predetermined order when small images are to be formed.

5. Apparatus according to Claim 4 wherein said electrical images stored in said memory(17) represent different color components of a plurality of multicolor images, and wherein said control means(18) includes means, when said apparatus is to form small images, for alternating the formation of images on the image member between two different multicolor images.

6. Apparatus according to claim 3 wherein said endless intermediate transfer member is a drum(109).

7. Apparatus according to claim 3 wherein said endless intermediate transfer member is an endless web(81).

## Patentansprüche

1. Verfahren zum Herstellen von Mehrfarbenbildern, bei denen eine Anzahl Tonerbilder in unterschiedlicher Farbe auf einem Bildträger erzeugt, anschließend nacheinander einem endlosen Zwischenübertragngselement zugeführt und unmittelbar auf dessen Oberfläche deckungsgleich übertragen werden, während es wiederholt in Übertragungsposition zum Bildträger bewegt wird, um danach in einem Arbeitsgang vom Zwischenübertragungselement auf ein Kopieblatt oder eine andere Bildempfangsfläche übertragen zu werden, **dadurch gekennzeichnet,** daß der Bilderzeugungsvorgang das Herstellen sowohl großformatiger Tonerbilder auf dem Bildträger, deren längere Abmessung zur Bewegungsrichtung des Bildträgers parallel verläuft, als auch kleinformatiger Tonerbilder, deren längere Abmessung zur Bewegungsrichtung desselben quer verläuft, umfaßt, und daß der Umfang des Zwischenübertragungselements im wesentlichen mit dem Abstand vergleichbarer Ortspunkte auf dem Bildträger bei aufeinanderfolgenden großformatigen Bildern und mit dem Abstand vergleichbarer Ortspunkte bei einem Paar aufeinanderfolgender kleinformatiger Bilder übereinstimmt.

2. Verfahren nach Anspruch 1, gekennzeichnet durch das Aufbringen von Toner unterschiedlicher Farbe bei wenigstens zwei aufeinanderfolgenden großformatigen elektrostatischen Bildern und bei wenigstens zwei Paaren kleinformatiger elektrostatischer Bilder.

3. Elektrostatografische Vorrichtung zur Durchführung des Verfahrens nach Anspruch 1 mit einer Einrichtung (3) zum Erzeugen einer Anzahl elektrostatischer Bilder auf einem sich bewegenden Bildträger (2), Einrichtungen (4, 5, 6, 7) zum Tonen jedes elektrostatischen Bildes mit Toner unterschiedlicher Farbe, einer Einrichtung zum deckungsgleichen Übertragen der Tonerbilder auf ein endloses Zwischenübertragungselement (109; 81), und einer Einrichtung (91, 110) zum Übertragen des entstandenen Mehrfarben-Tonerbildes auf ein Empfangsblatt oder eine andere Bildempfangsfläche, **dadurch gekennzeichnet,** daß die Bilderzeugungseinrichtung (3) Mittel für die Herstellung von großformatigen elektrostatischen Bildern auf dem Bildträger, deren längere Abmessung zur Bewegungsrichtung des Bildträger (2) parallel verläuft, und Mittel für die Herstellung von kleinformatigen elektrostatischen Bildern, deren längere Abmessung zur Bewegungsrichtung desselben quer verläuft, aufweist, und daß der Umfang des Zwischenübertragungselements im wesentlichen mit dem Abstand vergleichbarer Ortspunkte auf dem Bildträger (2) bei aufeinanderfolgenden großformatigen Bildern und vergleichbarer Ortspunkte bei einem Paar aufeinanderfolgender kleinformatiger Bilder übereinstimmt.

4. Vorrichtung nach Anspruch 3, dadurch gekennzeichnet, daß die Bilderzeugungseinrichtung (3) Mittel zur Erzeugung eines elektrostatischen Bildes in Abhängigkeit von einem elektrischen Signal aufweist sowie eine Steuereinrichtung (18), die mit einem Bildspeicher (17) derart zusammenwirkt, daß bei der Herstellung großformatiger Bilder der Bilderzeugungseinrichtung die im Bildspeicher gespeicherten elektrischen Signale in einer vorbestimmten ersten Reihenfolge, bei der Herstellung kleinformatiger Bilder in einer vorbestimmten zweiten Reihenfolge zugeführt werden.

5. Vorrichtung nach Anspruch 4, dadurch gekennzeichnet, daß die im Speicher (17) gespeicherten elektrischen Signale unterschiedliche Farbkomponenten einer Anzahl von Mehrfarbenbildern darstellen, und daß die Steuereinrichtung (18) für die Erzeugung von kleinformatigen Bildern Mittel aufweist, welche die Erzeugung von Bildern auf dem Bildträger abwechselnd zwischen zwei verschiedenen Mehrfarbenbildern bewirken.

6. Vorrichtung nach Anspruch 3, dadurch gekennzeichnet, daß das endlose Zwischenübertragungselement eine Trommel (109) ist.

7. Vorrichtung nach Anspruch 3, dadurch gekennzeichnet, daß das endlose Zwischenübertragungselement ein Endlosband (81) ist.

## Revendications

1. Procédé pour former des images multicolores dans lequel une série d'images de développateur de différentes couleurs sont formées sur un organe de formation d'image, présentées ensuite dans l'ordre à un organe de transfert intermédiaire, transférées en coincidence directement sur la surface de l'organe de transfert intermédiaire au fur et à mesure que ledit organe intermédiaire avance en relation de transfert avec l'organe de formation d'image, et ensuite tranférées au cours d'une étape, de l'organe de transfert sur une feuille de copie ou sur une autre surface de réception, caractérisé en ce que l'étape de formation de ladite image comprend à la fois la formation de grandes images de développateur dont le grand côté se trouve dans la direction parallèle au mouvement de l'organe de formation d'image et la formation de petites images de développateur dont le grand côté se trouve dans la direction transversale au mouvement de l'organe d'image et en ce que ledit organe de transfert a une circonférence sensiblement égale à la distance sur ledit organe d'image comprise entre des points comparables présents sur de grandes images consécutives et égale à la distance sur ledit organe de formation d'image comprise entre des points comparables présents sur des paires consécutives de petites images.

2. procédé selon la revendication 1, comprenant une étape dans laquelle on applique des développateurs de differentes couleurs sur au moins deux grandes images électrostatiques consécutives et sur au moins deux paires consécutives de petites images électrostatiques.

3. Appareil électrostatographique pour mettre en oeuvre le procédé selon la revendication 1, comprenant des moyens (3) pour former une série d'images électrostatiques sur un organe de formation d'image en déplacement (2), des moyens (4, 5, 6, 7) pour développer chaque image électrostatique avec un développateur de couleur différente, des moyens pour transferer en coincidence les images de développateur sur un organe de transfert intermédiaire (109,81), et des moyens (91,110) pour transferer l'image de développateur multicolore résultante sur une feuille réceptrice ou tout autre surface, caractérisé en ce que les moyens de formation d'image (3) comprennent des moyens pour former de grandes images électrostatiques dont le grand côté se trouve dans la direction parallèle au mouvement de l'organe de formation d'image (2), et pour former de petites images électostatiques dont le grand côté se touve dans la direction transversale au mouvement dudit organe de formation d'image et en ce que l'organe de transfert a une circonférence sensiblement égale à la distance sur ledit organe de formation d'image (2) comprise entre des points comparables présents sur des grandes images consécutives et égale à la distance entre des points comparables présents sur des paires consécutives de petites images

4. Appareil selon la revendication 3, dans lequel lesdits moyens de formation d'image (3) comprennent des moyens pour former une image électrostatique en réponse à des signaux électriques ainsi que des moyens de commande (18) coopérant avec une mémoire d'image (17) pour présenter les signaux électriques stockés dans ladite mémoire d'image, auxdits moyens de formation d'image dans un premier ordre prédéterminé lorsque l'on forme de grandes images et dans un second ordre prédéterminé lorsque l'on forme des petites images.

5. Appareil selon la revendication 4, dans lequel lesdites images électriques stockées dans ladite mémoire (17) représentent les differentes composantes de couleurs d'une pluralité d'images multicolores et dans lequel lesdits moyens de commande (18) comprennent des moyens pour, lorsque l'on forme des petites images, alterner la formation d'images sur l'organe de formation d'image entre deux images multicolores différentes.

6. Appareil selon la revendication 3, dans lequel ledit organe de transfert intermédiaire est un cylindre (109)

7. Appareil selon la revendication 3, dans lequel ledit organe de transfert intermédiaire est une bande sans fin (81).

FIG.1

EP 0 302 908 B1

FIG. 2

EP 0 302 908 B1

FIG.3

EP 0 302 908 B1